**Europäisches Patentamt**

**European Patent Office**

**Office européen des brevets**

(19)

(11) Veröffentlichungsnummer: **0 016 257**
**B1**

(12) # EUROPÄISCHE PATENTSCHRIFT

(45) Veröffentlichungstag der Patentschrift:
**03.03.82**

(21) Anmeldenummer: **79105094.1**

(22) Anmeldetag: **11.12.79**

(51) Int. Cl.³: **F 16 B 11/00,** H 02 B 1/02,
F 16 B 12/04

(54) **Verbinder zum Aufbauen von Hohlrohrrahmengestellen.**

(30) Priorität: **22.03.79 DE 2911330**

(43) Veröffentlichungstag der Anmeldung:
**01.10.80 Patentblatt 80/20**

(45) Bekanntmachung des Hinweises auf die Patenterteilung:
**03.03.82 Patentblatt 82/9**

(84) Benannte Vertragsstaaten:
**AT BE CH FR IT NL**

(56) Entgegenhaltungen:
**DE-A-1 486 725**
**FR-A-2 149 211**

(73) Patentinhaber: **SIEMENS AKTIENGESELLSCHAFT,**
**Postfach 22 02 61, D-8000 München 22 (DE)**

(72) Erfinder: **Kerscher, Franz, Böcklerweg 13,**
**D-8000 München 82 (DE)**
Erfinder: **Schaffer, Günther, Espenweg 9,**
**D-8900 Augsburg (DE)**

ACTORUM AG.

Verbinder zum Aufbauen von Hohlrohrrahmengestellen

Die Erfindung betrifft einen Verbinder zum Aufbau von Hohlrohrrahmengestellen für die elektrische Nachrichtentechnik, insbesondere Datenverarbeitungstechnik, mit mindestens zwei an einem Knotenpunkt angesetzten Stutzen, die mit Kleberinnen versehen sind und die in die Hohlrohre eingeführt und mit diesen verklebt sind.

Die bisher bekannten Rahmengestelle bestehen aus miteinander verschweissten Vierkantrohren. Die Schweissung hat jedoch den Nachteil, dass durch die entstehende Hitze die Gestelle verzogen werden. Gleichzeitig wird der die Korrosion hemmende Metallüberzug beschädigt. Ein weiterer Nachteil des Schweissverfahrens besteht darin, dass bei einer zinkchromatierten Oberfläche beim Schweissen giftige Dämpfe auftreten. Die Schweissung erfordert ausserdem wegen der verbrannten Schweisszonen eine aufwendige Nachbehandlung.

Aus diesem Grunde ist es auch bereits bekannt, die einzelnen Vierkantrohre an ihren Ecken über sogenannte Eckknoten miteinander zu verkleben. Diese Eckknoten stellen dabei Verbinder dar, die einen Knotenpunkt aufweisen, von dem aus zum Beispiel drei aufeinander senkrecht stehende Stutzen ausgehen, die aus Metall, z.B. aus Aluminium, bestehen. Diese Eckknoten werden dann in die Hohlrohre eingeschoben und mit diesen verklebt. Dabei sind auf der Stutzenoberfläche umlaufende Kleberinnen vorgesehen, welche über zwei Längsrillen miteinander verbunden sind. Beim Einspritzen des Klebers füllt sich zuerst die Kleberinne, danach erst tritt der Kleber in den Klebespalt von allen Seiten ein. Die Luft wird dabei auf der Klebefläche eingeschlossen und es bleibt etwa 30% der Klebefläche ohne Benetzung bzw. ohne Kleberfüllung. Die Klebeverbindung muss daher grösser ausgelegt werden, d.h., die Schenkellänge der einzelnen Eckknoten muss vergrössert werden.

Aufgabe der vorliegenden Erfindung ist es, einen Verbinder zu schaffen, durch den Lufteinschlüsse zwischen Hohlrohr und Verbinder beim Verkleben weitgehend vermieden werden.

Zur Lösung dieser Aufgabe wird der Verbinder für Hohlrahmengestelle derart ausgebildet, dass die Kleberinnen aus mindestens einer an der Oberfläche der Stutzen umlaufenden periferen Rille bestehen, von der aus Stichgräben weggeführt sind.

Durch diese Massnahmen wird eine wesentlich gleichmässigere Verteilung des Klebers erreicht, was zu einer stabileren Konstruktion unter Verkleinerung der Schenkel der Eckknoten führt. Darüber hinaus werden die korrosionsschützenden Überzüge nicht verletzt. Ausserdem ist man in der Wahlfreiheit des Materials des Überzugs wesentlich freizügiger, da man auf giftige Dämpfe, die beim Schweissen entstehen können, keine Rücksicht mehr zu nehmen braucht.

Die konkrete Ausbildung der Kleberillen führt dazu, dass die Luft beim Druckaufbau im Spalt nach den Enden abfliessen kann.

Es können mindestens zwei Stutzen senkrecht aufeinander stehen, so dass mit dieser Konstruktion auch einfache Gestelle aus Hohlrohren hergestellt werden können.

Eine weitere Unterstützung der günstigen Kleberverteilung erreicht man dann, wenn auf jeden der Stutzen des Verbinders vor dem Kleben eine eng tolerierte Lochscheibe aufgeschoben ist, die den Austritt des Klebers hemmt.

Die Stutzen können dabei eine rechteckige Querschnittsform aufweisen. Vorteilhaft ist es, auf jeder Seite des Vierkants mindestens einen Stichgraben senkrecht zur periferen Rille vorzusehen.

Anhand der Ausführungsbeispiele nach den Fig. 1 bis 4 wird die Erfindung näher erläutert.

Es zeigen dabei:
Fig. 1 die Vorder-, die Seitenansicht und die Draufsicht eines dreischenkeligen Eckverbinders,
Fig. 2 den Seitenriss eines derartigen Verbinders, der bereits in ein Hohlrohr eingeführt und mit diesem verklebt ist,
Fig. 3 eine perspektivische Darstellung einer Ecke eines mit einem Eckverbinder aufgebauten Rahmengestelles,
Fig. 4 ein Detail des Verbinders mit aufgeschobener Lochscheibe.

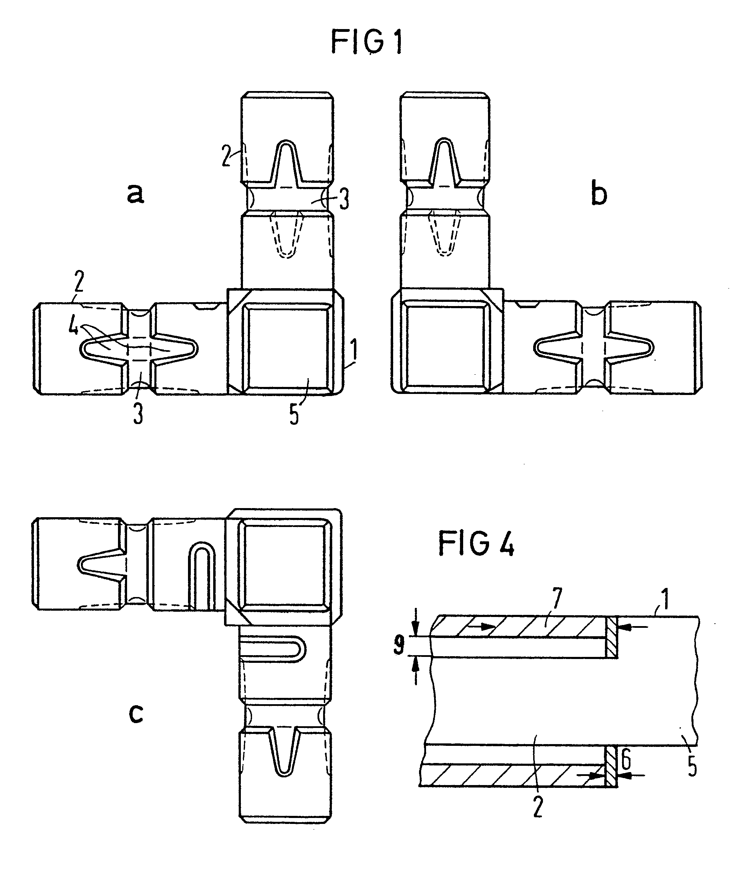

Der Verbinder in Fig. 1 besteht aus einem Knotenpunkt 5, von dem aus in drei Dimensionen senkrecht aufeinander stehend Stutzen 3 ausgehen. Jeder dieser Stutzen ist mit einer periferen Rille 3 versehen, von der aus mindestens ein Stichgraben 4 ausgeht. Dabei ist eine rechteckige Ausführungsform eines derartigen Verbinders gezeigt, wobei der Verbinder im vorliegenden Fall aus Metall, nämlich aus Aluminium, bestehen soll. Man ist jedoch auf diesen Werkstoff nicht beschränkt, vielmehr können diese Verbinder aus jedem beliebigen Metall oder auch aus Kunststoff hergestellt werden. Darüber hinaus können die Verbinder auch lediglich zwei in einer Ebene liegende Stutzen enthalten, so dass keine Eckverbindung aber eine stumpfe Verbindung zweier Hohlrohre miteinander ermöglicht wird.

Fig. 1a zeigt dabei die Vorderansicht, Fig. 1b die Seitenansicht und Fig. 1c die Draufsicht.

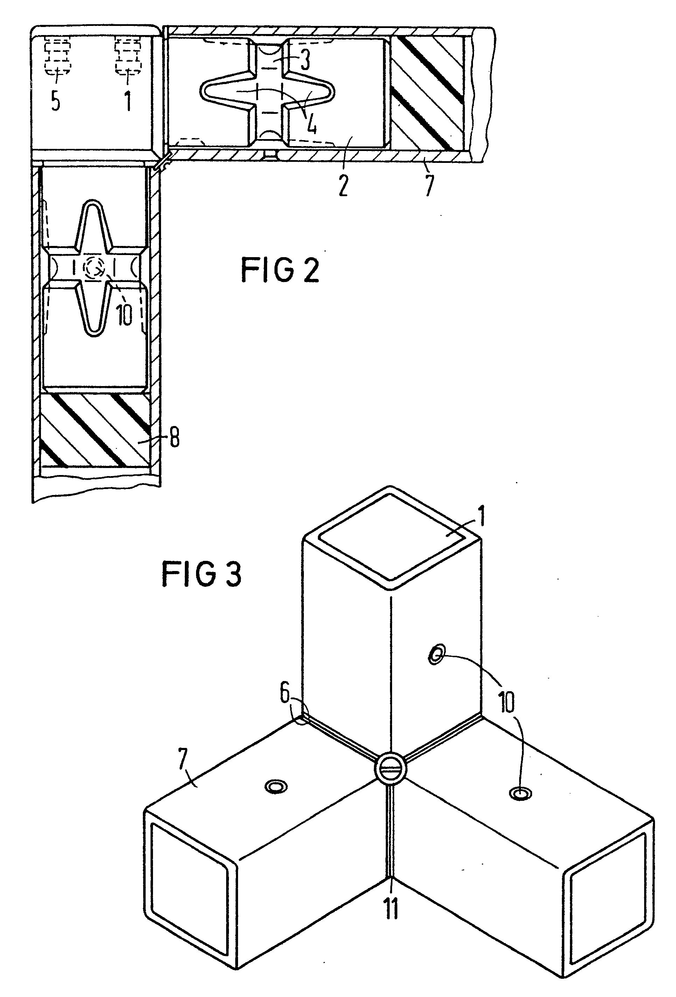

Fig. 2 zeigt einen in ein Vierkantrohr eingeklebten Verbinder in Vorderansicht, wobei der Schnitt durch die Kleberinne, die zwischen einem derartigen Verbinder und der jeweiligen Hohlrohrfläche existiert, geführt ist. Zur Verringerung des Kleberaustritts wird das Hohlrohr jeweils mit einer Schaumschutzstoffdichtung 8 abgeschlossen. Zwischen der Wandung 7 des Vierkantrohres und dem Verbinder 1 bzw. den Stutzen des Verbinders 2 liegt die Klebespalte 9. Die Kleberzuführung für die Kleberinnen 3, 4 erfolgt über eine Öffnung 10. Der Kleber wird dabei unter Druck in Höhe der periferen Rille (3) eingeführt, wobei sich zunächst diese perifere Kleberille (3) mit Klebstoff füllt. Anschliessend verteilt sich der Klebstoff über die Stichgräben gleichmässig in der Klebespalte 9. Die Luft kann dabei im Spalt nach den Enden hin abfliessen, so dass der Einschluss von Luftblasen weitgehend unterbunden wird.

Die Fig. 3 zeigt eine Eckverbindung mit den Vierkantrohren 7, den darin befindlichen nur im Schnitt zu sehenden Eckverbinder 1 sowie die für die Zuführung des Klebers vorgesehenen Öffnungen 10. Die am inneren Eckpunkt dieser Eckverbindung vorgesehene Schraube 11 dient elektrischen Zwecken.

Fig. 4 zeigt eine vereinfachte Skizze, wobei auf einen Stutzen 2 des Verbinders 1 eine eng tolerierte Lochscheibe 6 aufgeschoben ist. Diese Lochscheibe verhindert den Kleberaustritt am Knotenpunkt des Verbinders, wodurch eine weitere Verbesserung der Kleberverteilung im Klebespalt selbst erzielt wird.

**Patentansprüche**

1. Verbinder zum Aufbau von Hohlrohrrahmengestellen für die elektrische Nachrichtentechnik, insbesondere Datenverarbeitungstechnik, mit mindestens zwei an einem Knotenpunkt angesetzten Stutzen, die mit Kleberinnen versehen sind und die in die Hohlrohre eingeführt und mit diesen verklebt sind, dadurch gekennzeichnet, dass die Kleberinnen aus mindestens einer an der Oberfläche der Stutzen (2) umlaufenden periferen Rille (3) bestehen, von der aus Stichgräben (4) weggeführt sind.

2. Verbinder nach Anspruch 1, dadurch gekennzeichnet, dass mindestens zwei Stutzen (2) senkrecht aufeinanderstehen.

3. Verbinder nach einem der vorhergehenden Ansprüche, dadurch gekennzeichnet, dass auf jedem Stutzen (2) vor dem Kleben eine eng tolerierte Lochscheibe (6) aufgeschoben ist.

4. Verbinder nach einem der vorhergehenden Ansprüche, dadurch gekennzeichnet, dass die Stutzen (2) einen rechteckigen Querschnitt aufweisen und dass auf jeder Seite des so entstehenden Vierkantes mindestens ein Stichgraben (4) senkrecht zur periferen Rille (3) vorgesehen ist.

**Claims**

1. A connector for the assembly of hollow tube frames for electrical communications equipment, in particular data processing equipment, comprising at least two connection pieces which are attached at a junction and are provided with adhesion grooves inserted into the hollow tubes and glued thereto, characterised in that the adhesion grooves consist of at least one central channel (3) which runs round the surface of the connecting pieces (2) and from which transverse slots (4) branch off.

2. A connector as claimed in claim 1, characterised in that at least two connecting pieces (2) are mutually perpendicular.

3. A connector as claimed in one of the preceding claims, characterised in that a close tolerance apertured disk (6) has been slipped onto each connecting piece (2) prior to the adhesion.

4. A connector as claimed in one of the preceding claims, characterised in that the connecting pieces (2) have a rectangular cross-section and that, on each side of the square formed in this way, there is arranged at least one transverse slot (4) normal to the central channel (3).

**Revendications**

1. Elément de raccord pour le montage de baies à tubes creux pour la technique électrique des communications, plus particulièrement pour la technique des traitements de données, du type comportant deux embouts qui sont portés par anneaux d'assemblage, qui sont pourvus de rigoles de collage et qui sont susceptibles d'être introduits dans les tubes creux et d'être collés avec ces derniers, caractérisé par le fait que les rigoles sont constituées par au moins une gorge centrale s'étendant sur le pourtour de la surface de l'embout (2), à partir duquel s'étendent des encoches (4).

2. Elément de raccord selon la revendication 1, caractérisé par le fait qu'au moins deux embouts s'étendent perpendiculairement entre eux.

3. Elément de raccord selon l'une des revendications précédentes, caractérisé par le fait qu'avant le collage, on engage sur chaque embout (2) un disque ajouré (6), avec une faible tolérance.

4. Elément de raccord selon l'une des revendications précédentes, caractérisé par le fait que les embouts (2) possèdent une section transversale rectangulaire et que sur chaque côté du quatre-pans ainsi réalisé est prévue au moins une encoche (4) perpendiculaire à la gorge centrale (3).

# FIG 1

a

b

c

# FIG 4

FIG 2

FIG 3